# EUROPEAN PATENT APPLICATION

(11) **EP 1 048 206 A2**
(43) Date of publication of application: **02.11.2000**
(21) Application number: 00303495.6
(22) Date of filing: 26.04.2000
(51) Int. Cl.: A01K 1/015, A01K 1/035

(54) **Body-waste absorbing sheet and method for manufacturing the same**

(30) Priority: 26.04.1999 JP 11751299; 26.12.1999 JP 37262099
(71) Applicant: Uni-Heartous Corporation, Shinagawa-ku, Tokyo 140-0031 (JP)
(72) Inventor: Takahara, Toshio,c/o Uni-Heartous Corp., Tokyo 140-0031 (JP); Yamamoto, Masamitsu, c/o Uni-Heartous Corp., Tokyo 140-0031 (JP); Kimura, Noriyuki, c/o Uni-Heartous Corp., Tokyo 140-0031 (JP); Ochi, Kango, c/o Uni-Heartous-Corp., Tokyo 140-0031 (JP); Ikesawi, Takeshi, c/o Uni-Heartous-Corp., Tokyo 140-0031 (JP)
(74) Representative: Parry, Christopher Stephen

(57) **Abstract**

There is disclosed a body-waste absorbing sheet including: a rectangular absorbent mat including a liquid-permeable surface sheet, a liquid-impermeable back sheet and an absorbent core sandwiched between the surface sheet and the back sheet; and a flap. The flap extends from at least one side of the absorbent mat, while having an extension length of no less than 0.3 times the length of the side of the absorbent mat parallel to the extending direction of the flap. Alternatively, the flap extends from a starting point on an area of the surface sheet which covers the absorbent core of the absorbent mat.

## Description

### BACKGROUND OF THE INVENTION

### FIELD OF THE INVENTION

The present invention relates to a body-waste absorbing sheet for absorbing the body-waste of a pet or for cares on a bed, and a method for manufacturing the body-waste absorbing sheet. More specifically, the invention relates to a body-waste absorbing sheet capable of preventing a wall or the like from being splashed with the body-waste spattered by a pet or capable of being prevented from going out of position on a sheet or mat of a caring bed, and a method for manufacturing the body-waste absorbing sheet.

### RELATED ART

In order to dispose the body-waste of a pet such as a dog or cat kept in a house, there has been used a sheet for absorbing the body-waste of the pet. This body-waste absorbing sheet for the pet is constructed to include: a liquid-permeable surface sheet of a nonwoven fabric or the like; a liquid-impermeable back sheet of a resin film or the like; and an absorbent core sandwiched between the surface sheet and the back sheet.

The absorbent core is prepared, for example, by covering a highly water-absorbent resin layer placed on the surface of a pulp layer, a pulverized pulp layer and a highly water-absorbent resin dispersed in the pulp layer, or only the highly water-absorbent resin layer, with absorbent paper such as tissue paper. The body-waste absorbing sheet of this kind is arranged, when used, at a corner of room or bath room or along a wall so as to absorb the water such as urine mainly.

Depending upon the position of the pet passing urine, however, the urine may scatter outside of the body-waste absorbing sheet. Especially a male dog passes its urine sideways by instinct while raising its rear leg, thus causing a problem that much urine scatters to splash on the wall nearby. In order to solve this problem, there has been disclosed in Examined Published Japanese Utility Model Registration No. H3-6205 a male dog urine mat which is a rectangular absorbent mat and can be folded so as to place it continuously from the floor to the wall.

However, this male dog urine mat is provided with the absorbent at its portion to be placed on the wall. As a result, the mat is not only relatively large-sized to raise the cost but also so bulky that it is inconvenient for transportation or storage. Because the portion to be placed on the wall has a relatively large weight due to the presence of the absorbent, on the other hand, there is caused a defect that it is difficult to hold the portion on the wall for a long period of time and therefore, the portion placed on the wall is liable to slip down the floor. For eliminating these defects, a strong adhesive could be used but would be left on the wall when the mat is peeled.

For caring a patient or for bearing a baby, on the other hand, there is used an absorbent sheet to be placed on the mat or sheet of a bed. This absorbent sheet also has a defect that it is liable to go out of position on the mat or sheet.

### SUMMARY OF THE INVENTION

An object of the invention is to provide a body-waste absorbing sheet for a pet, which can prevent a wall face or the like from being splashed with the scattered waste and which is hard to allow its portion placed on a wall face or the like to slip down, and a method for manufacturing the body-waste absorbing sheet.

Another object of the invention is to provide a body-waste absorbing sheet for caring which is hard to go out of position when placed on a mat or sheet on a bed, and a method for manufacturing the body-waste absorbing sheet.

According to a first aspect of the invention, there is provided a body-waste absorbing sheet comprising: a rectangular absorbent mat including a liquid-permeable surface sheet, a liquid-impermeable back sheet and an absorbent core sandwiched between the surface sheet and the back sheet; and a flap extending from at least one side of the absorbent mat, wherein the flap has an extension length of no less than 0.3 times the length of the side of the absorbent mat parallel to the extending direction of the flap.

Here, the extension length is measured from the side (or the trailing end portion) of the absorbent core located the closest to the aforementioned side of the absorbent mat.

According to a second aspect of the invention, there is provided a body-waste absorbing sheet comprising: a rectangular absorbent mat including a liquid-permeable surface sheet, a liquid-impermeable back sheet and an absorbent core sandwiched between the surface sheet and the back sheet; and a flap extending from a starting point on an area of the surface sheet which covers the absorbent core of the absorbent mat.

For example, the flap may include means for retaining it on a wall face in a position folded upwards from the absorbent mat so that the body-waste absorbing sheet is used for absorbing the body-waste of a pet. In this case, the body-waste absorbing sheet can be used by placing the absorbent mat on the floor, pet toilet or the like and by retaining the flap on the wall face such as the wall of a house or the inner wall of the pet toilet by retaining means such as an adhesive. This flap has no absorbent core therein so that it can be obtained at a lower cost than that of the prior art. On the other hand, the flat has such a light weight that it does not slip down from the wall face even if the adhesion of the adhesive for holding it on the wall is not so strong.

Alternatively, the body-waste absorbing sheet may be provided with two flaps extending from opposite sides of the absorbent mat, which can be wrapped in a sheet or mat on a bed, so that the body-waste absorbing sheet can be used for absorbing the body-waste on the bed. In this case, the absorbent mat can be placed on the sheet or mat of the bed, and the flaps having no absorbent core extending sideways can be wrapped in the sheet or mat so that the absorbent mat can be prevented from going out of position on the bed.

According to a third aspect of the invention, there is provided a method for manufacturing a body-waste absorbing sheet, comprising the steps of: adhering or fusing a folded or tubular liquid-impermeable back sheet and a liquid-permeable surface sheet at the outer periphery of an absorbent core while sandwiching the absorbent core between the back sheet and the surface sheet; forming a rectangular absorbent mat while sandwiching the absorbent core between the back sheet and the surface sheet; and forming a flap extending from the absorbent mat by the back sheet unfolded or cut from the tube.

According to a fourth aspect of the invention, there is provided a method for manufacturing a body-waste absorbing sheet, comprising the steps of: adhering or fusing a liquid-impermeable back sheet and a liquid-permeable surface sheet to be overlapped substantially all over the back sheet, at least in the outer periphery of an absorbent core, while sandwiching the absorbent core at an offset position between the back sheet and the surface sheet; and forming a rectangular absorbent mat sandwiching the absorbent core between the back sheet and the surface sheet, and a flap extending from the absorbent mat while overlapping the back sheet and the surface sheet.

### BRIEF DESCRIPTION OF THE DRAWINGS

Fig. 1 is a top plan view showing a body-waste absorbing sheet according to a fist embodiment of the invention;
Fig. 2 is a section taken along line II-II of Fig. 1;
Fig. 3 is a section showing a body-waste absorbing sheet according to a second embodiment of the invention;
Fig. 4 is a perspective view for explaining a state in which a body-waste absorbing sheet is used for a pet;
Fig. 5 is a perspective view showing one example of a method for manufacturing the body-waste absorbing sheet shown in Figs. 1 and 2;
Fig. 6 is a perspective view showing one example of a method for manufacturing the body-waste absorbing sheet shown in Fig. 3;
Fig. 7 is a section showing a body-waste absorbing sheet according to a third embodiment of the invention;
Fig. 8 is a partially enlarged section showing a peripheral edge region of a modification of the body-waste absorbing sheet of Fig. 7;
Fig. 9 is a partially enlarged section showing a peripheral edge region of a modification of the body-waste absorbing sheet of Fig. 7;
Fig. 10 is a partially enlarged section showing a peripheral edge region of a modification of the body-waste absorbing sheet of Fig. 7;
Fig. 11 is a section showing a body-waste absorbing sheet according to a fourth embodiment of the invention;
Fig. 12 is a section showing a body-waste absorbing sheet according to a fifth embodiment of the invention;
Fig. 13 is a section showing a body-waste absorbing sheet according to a sixth embodiment of the invention; and
Fig. 14 is a section showing a body-waste absorbing sheet according to a seventh embodiment of the invention, which is to be used as a caring sheet.

### DESCRIPTION OF THE PREFERRED EMBODIMENTS

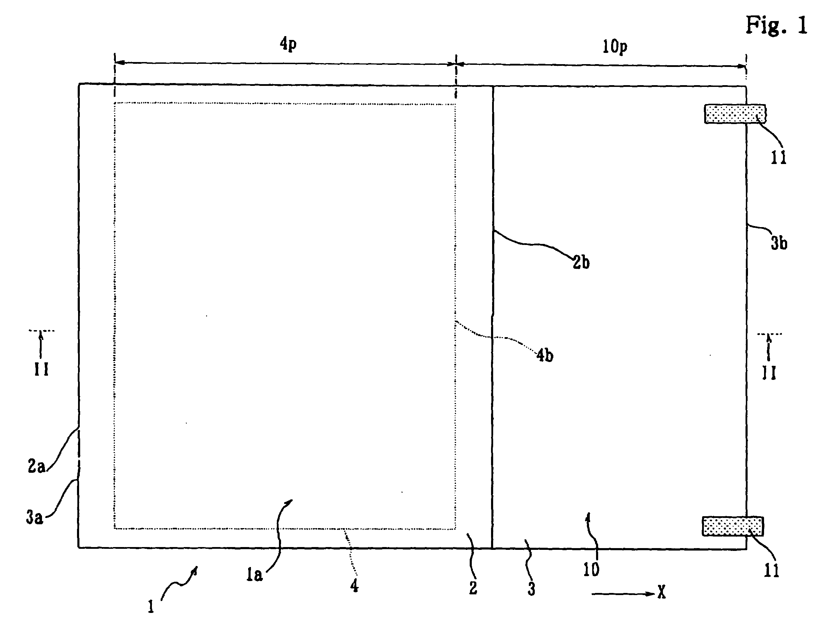

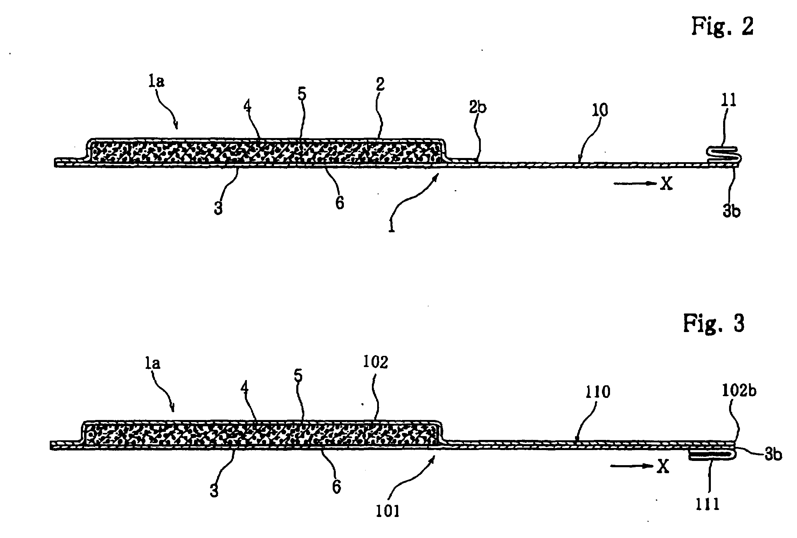

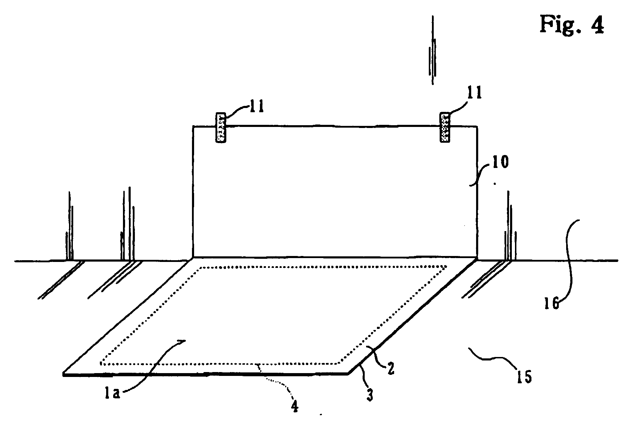

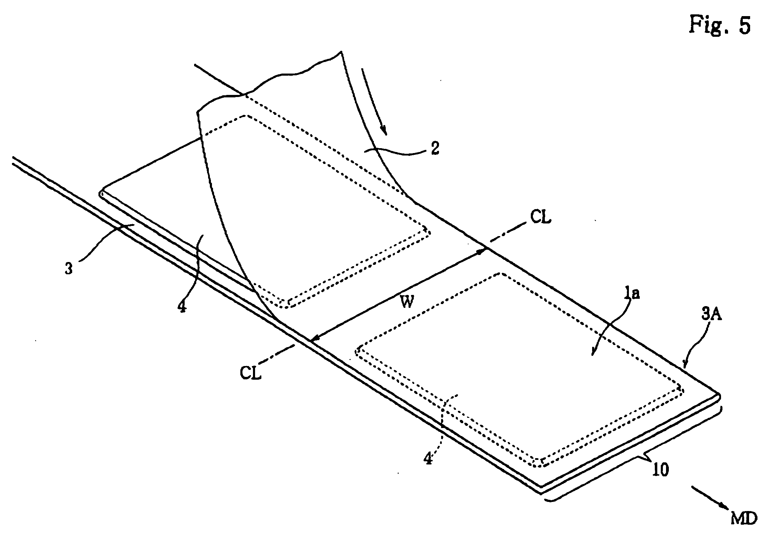

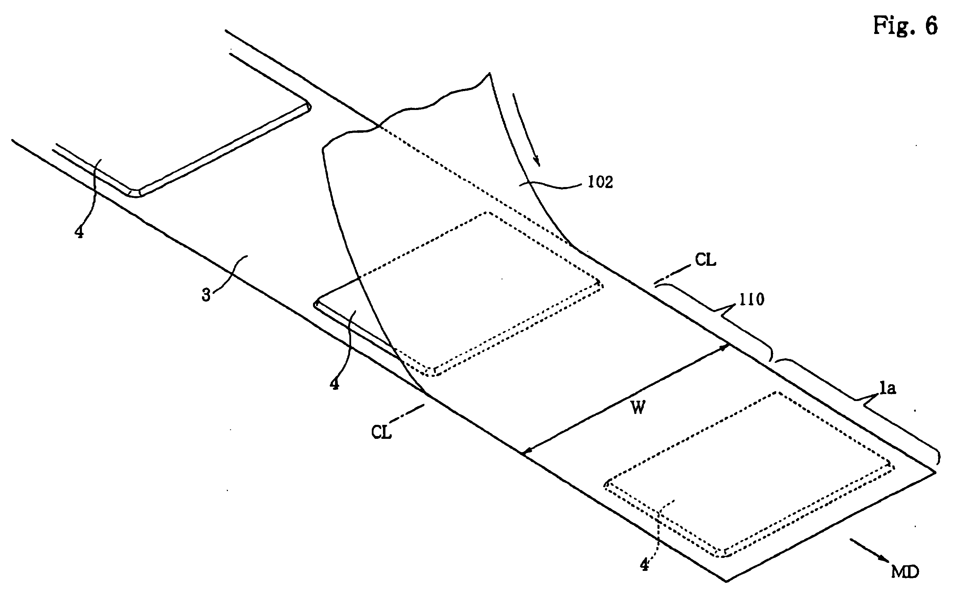

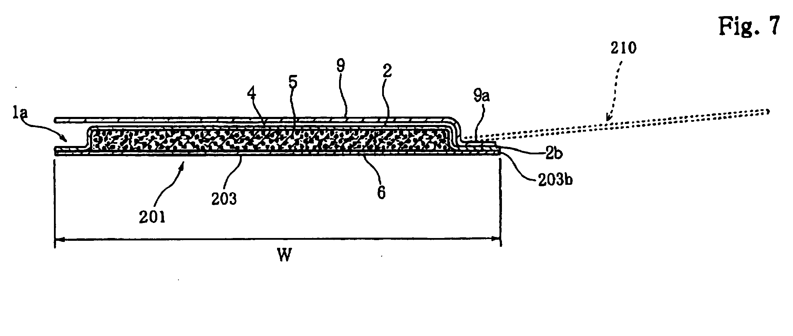

Here will be described embodiments of the body-waste absorbing sheet of the invention with reference to the accompanying drawings. Fig. 1 is a top plan view showing a body-waste absorbing sheet according to a first embodiment of the invention, as taken from a liquid receiving side. Fig. 2 is a section taken along line II-II of Fig. 1. Fig. 3 is a section showing a body-waste absorbing sheet according to a second embodiment of the invention. Fig. 4 is a perspective view for explaining a state in which the body-waste absorbing sheet shown in Figs. 1 and 2 or Fig. 3 is used for a pet. Fig. 5 is a perspective view showing one example of a method for manufacturing the body-waste absorbing sheet shown in Figs. 1 and 2. Fig. 6 is a perspective view showing one example of a method for manufacturing the body-waste absorbing sheet shown in Fig. 3. Fig. 7 is a section showing a body-waste absorbing sheet according to a third embodiment of the invention. Here, Figures illustrate the body-waste absorbing sheets exaggerating their thicknesses slightly.

In a body-waste absorbing sheet 1 for a pet according to a first embodiment of the invention, as shown in Figs. 1 and 2, a rectangular absorbent core 4 (shown dotted in Fig. 1) is sandwiched between a liquid-impermeable back sheet 3 of a rectangular shape and a liquid-permeable surface sheet 2 of a rectangular shape. At the absent portion of the absorbent core 4, i.e., at the peripheral edge region outside of the absorbent core 4, moreover, the surface sheet 2 and the back sheet 3 are bonded with a hot-melt adhesive or the like. Alternatively, the surface sheet 2 and the back sheet 3 may be thermally fused to each other at the aforementioned peripheral edge region. The surface sheet 2 has a rectangular shape of 45 cm x 32 cm, for example, and the absorbent core 4 is of a size smaller than the former. Here, the sizes of the absorbent core 4 and the surface sheet 2 can be suitably changed according to the body of a target pet. The sizes may be exemplified by a rectangle of about 90 cm x 120 cm.

As shown in Fig. 2, the back sheet 3 is made larger than the absorbent core 4 and the surface sheet 2 and is extended in a X-direction on the longer sides of the absorbent core 4 and the surface sheet 2 to form a liquid-impermeable flap 10. At one side of a rectangular absorbent mat 1a formed of the surface sheet 2, the back sheet 3 and absorbent core 4, more specifically, the back sheet 3 is exclusively extended to form the flap 10 thereby to provide the rectangular body-waste absorbing sheet 1 as a whole. Here, the shape or size of the body-waste absorbing sheet 1 may be suitably regulated into a square shape as a whole. To the end portion of the flap 10 (i.e., to the end portion 3b of the back sheet 3), moreover, there is provided means for retaining the flap 10 on a wall face or the like. In the embodiment shown, the retaining means is composed of adhesive tapes 11 and 11 as peelable adhesion means.

When this body-waste absorbing sheet 1 is to be used, as shown in Fig. 4, the absorbent mat 1a is placed on a floor 15, and the flap 10 is raised upright from the floor 15 and is retained on a wall face 16 by means of the adhesive tapes 11. When the body-waste absorbing sheet 1 is used in the state shown in Fig. 4, the wall is prevented by the liquid-impermeable flap 10 from being splashed with, for example, the urine which is passed and scattered toward the wall by a male dog raising its rear leg. Here, in order to effectively prevent the scatter of the urine toward the wall, an extension length 10p of the flap 10 from the end portion 4b of the absorbent core 4 (i.e., the extension length of the back sheet 3 in the X-direction) is preferred to be no less than 0.3 times and no more than 2.0 times the length 4p (as taken in the X-direction) of the shorter side of the absorbent core 4. The extension length 10p is more preferably no less than 0.5 times the shorter side length 4p of the absorbent core 4.

The liquid-permeable surface sheet 2 may be made of any suitable material, for example, point-bonded nonwoven fabric. This point-bonded nonwoven fabric is made of either hydrophilic fibers or hydrophilized hydrophobic fibers, as exemplified by synthetic fibers such as polyethylene fibers, polypropylene fibers or their composite fibers. The term "hydrophilized hydrophobic fiber" as used herein means a hydrophobic fiber subjected to a hydrophilic treatment. In this hydrophilic treatment, a hydrophobic fiber is made hydrophilic, for example, by treating it with a surfactant; by chemically binding a chemical substance such as a monomer or a polymer having a hydrophilic group thereto; by subjecting it to plasma processing; by kneading it with a chemical substance having a hydrophilic group; or by treating its surface to have a profiled section. The point-bonded nonwoven fabric may contain water-absorbent fibers such as rayon fibers. For the liquid-permeable surface sheet 2, use can also be made of other types of nonwoven fabric, such as liquid-permeable one made of hydrophobic fibers or one having a number of pores.

The liquid-impermeable back sheet 3 may be made of any suitable material, for example, polyolefin such as a polyethylene (PE) film or a vinyl sheet. This film or sheet may be laminated with a nonwoven fabric on its back On the liquid receiving side of the back sheet 3, moreover, at least the region to be formed with the flap 10 is preferably subjected to a surface treatment. This surface treatment prevents the urine having been splashed on the flap 10 from further splashing another place. This surface treatment is effected by treating the surface with a corona discharge or by coating the surface with a surface-active agent. Alternatively, the urine splash preventing effect could be expected, too, by embossing to rough the film or sheet making the back sheet 3.

In contrast, the region of the back sheet 3 to form the flap 10 may be coated on its surface with fluorine or silicone to enhance its water repellency. In this case, when the body-waste absorbing sheet 1 is placed as shown in Fig. 4, for example, the urine having been splashed on the flap 10 can flow down on the flap 10 toward the absorbent mat 1a so that it may be absorbed by the absorbent core 4 of the absorbent mat 1a. In this case, moreover the flap 10 may be made highly water-repellent at its region close to the absorbent core 4 and may be enhanced in the aforementioned splash preventing effect at its region apart from the absorbent core 4.

The liquid-impermeable back sheet 3 may be made of a nonwoven fabric or paper which is coated on its surface with fluorine or silicone to enhance the water repellency and the water proofness.

The absorbent core 4 is provided to absorb liquid. In the embodiment shown, the absorbent core 4 is prepared by enveloping a dispersion of a highly water-absorbent resin 5 in a pulp layer 6 with absorbent paper such as tissue paper. However, the term "absorbent core" as used herein is generic and is not limited to any particular shape, composition or type of absorbent core. For example, the highly water-absorbent resin 5 may be arranged on both the surface and bottom of the pulp layer 6. The highly water-absorbent resin 5 can be exemplified by additive polymers such as polyacrylic, polyvinyl alcohol, maleic anhydride groups or others, polymers represented by polyether or condensate groups, polysaccharides such as starch or cellulose groups, or granules of proteins such as collagen. The highly water-absorbent resin 5 can also be exemplified by bridged compounds of polyacrylic sodium, starch copolymers of polyacrylic sodium, or cellulose copolymers of polyacrylonitrile. Of these, the bridged compounds of polyacrylic sodium or polyacrylic acid are preferable because they are inexpensive. In addition, the absorbent core 4 may be made of only pulp without any highly water-absorbent resin.

Here, the handling at the manufacturing stage is easy if the absorbent core 4 is covered with the tissue paper. In the presence of this tissue paper, moreover, the back sheet 3 can be prevented from being damaged by the relatively hard highly water-absorbent resin. On the other hand, the tissue paper just below the surface sheet 2 of the body-waste absorbing sheet 1 is preferably colored in blue or the like to give a clean appearance.

The adhesive tapes 11 are disposed on the liquid receiving side, as shown in Fig. 2, and are doubly folded in a Z-shape so that it may not get in the way on storage of the body-waste absorbing sheet 1. The adhesive tapes 11 are extended, when used, in the X-direction, as shown in Figs. 1 and 4, and are retained at their exposed adhesive layers on the wall face or the like. Alternatively, the adhesive tapes 11 may be folded in a V-shape so that they may be retained, when used, on the wall face or the like by extending them and by peeling the peeling sheets to expose the adhesive layers. In addition, the adhesive tapes may be double-coated tapes and disposed on the back side (i.e., the side opposed to the liquid receiving side) of the back sheet 3. Here, the retaining means should not be limited to the adhesive tapes but any means may be used if they can be retained on the wall face or the like. For example, hooks or magic tapes may be used and retained on the wall face or the like. By preparing projections on the wall face or the like, moreover, the loops or hooks provided on the body-waste absorbing sheet may be retained on the projections.

Here will be described a second embodiment with reference to Fig. 3. Hereinafter, the detailed description of the portions having the same constructions as those of the first embodiment will be omitted by designating them by the common reference numerals,

In a body-waste absorbing sheet 101 shown in Fig. 3, there is provided a surface sheet 102 in place of the surface sheet 2 of the Fig. 2. The surface sheet 102 is made of the same material as that of the surface sheet 2 but is different in size to overlie the extended portion of the back sheet 3. More specifically, the surface sheet 102 and the back sheet 3 are given substantially equal areas, and the end portion 102b of the surface sheet 102 and the end portion 3b of the back sheet 3 are extended to substantially the same positions to form a flap 110 of the overlap of the surface sheet 102 and the back sheet 3. In this case, the liquid receiving side of the flap 110 is covered with the nonwoven fabric of the surface sheet 102 so that the urine is held, if a little, by the surface sheet 102 but is hardly splashed to another place. Here in this case, the extension length of the flap 110 is preferably made such that the length from the end portion (as indicated at 4b in Fig. 1) of the absorbent core 4 to the end portion 3b of the back sheet 3 is no less than 0.3 times the shorter side length 4p (or the length in the X-direction) of the absorbent core 4, more preferably no less than 0.5 times and no more than 2.0 times. In this embodiment, moreover, adhesive tapes 111 as means for retaining the flap 110 on a wall face or the like is preferably provided to the back sheet 3, on the side opposite to the liquid receiving side of the back sheet 3.

Fig. 5 shows one example of a method for manufacturing the body-waste absorbing sheet 1 having the structure shown in Figs. 1 and 2. In this manufacture method, the back sheet 3 is folded in half such that its portion to mainly form the flap 10 later is overlapped on the back side, and is fed in the two-folded state with its fold (or folding line) 3A being in the Machine Direction (MD). The absorbent cores 4 are placed at a predetermined interval on the surface of the back sheet 3 thus folded. Then, the surface sheet 2 is fed in the MD, and the absorbent core 4 is sandwiched between the folded back sheet 3 and the surface sheet 2. The back sheet 3 and the surface sheet 2 are adhered at the peripheral edge region outside of the absorbent core 4 by means of the hot-melt adhesive or the like. Then, a cutting is made along a cutting line CL to complete the individual body-waste absorbing sheets 1.

The body-waste absorbing sheets 1 thus completed are packaged with the back sheets 3 being folded in half and further in folios or quartos. For use, the portion sandwiching the absorbent core 4 provides the absorbent mat 1a, and the flap 10 is obtained by developing the back sheet 3 folded in half.

In the manufacture method shown in Fig. 5, the body-waste absorbing sheet 1 is fed with the back sheet 3 being folded in half, and the feed width on the manufacture apparatus may be referred to the width size W of the folded back sheet 3. As a result, the manufacture line can be narrowed to avoid a large size of the production facilities.

Fig. 6 shows one example of a method for manufacturing the body-waste absorbing sheet 101 shown in Fig. 3. In this manufacture method, the back sheet 3 is fed in the MD while carrying the absorbent cores 4 at an interval. Over the absorbent cores 4, moreover, the surface sheet 102 is fed in the MD so that the absorbent cores 4 are sandwiched between the back sheet 3 and the surface sheet 102. At least in the peripheral edge region outside of the absorbent cores 4, moreover, the back sheet 3 and the surface sheet 102 are adhered by means of the hot-melt adhesive or the like.

The laminate thus prepared is fed in the MD and cut along the cutting line CL to complete the individual body-waste absorbing sheets 101. Here, by adjusting the feed velocity of the laminate in the MD and the cutting timing at a cutter, the absorbent core 4 in the cut laminate may be at a position offset in the MD between the back sheet 3 and the surface sheet 102. In the cut body-waste absorbing sheet 101, moreover, the region in which the absorbent core 4 is sandwiched provides the absorbent mat 1a, and the succeeding portion where the back sheet 3 and the surface sheet 102 overlap provides the flap 110.

In the manufacture method shown in Fig. 6, too, the width size on the manufacture apparatus may refer to the width size W of the back sheet 3 and the surface sheet 102 and it need not be made large. By adjusting the feeding velocity of the laminates, the placing speed of the absorbent cores 4 and the cutting timing at the cutter, moreover, the length of the flap 110 can be easily set. Here, the cutting line CL may be set freely on demand. For example, by setting the cuffing line CL at a middle point of two laminates, a body-waste absorbing sheet for caring (which will be discussed more fully hereinafter) can be manufactured.

Fig. 7 shows a modification of the body-waste absorbing sheet 1 according to the first embodiment of the invention (or a body-waste absorbing sheet according to a third embodiment of the invention). In a body-waste absorbing sheet 201 shown in Fig. 7, there is provided a back sheet 203 in place of the back sheet 3 of the Fig. 2. The back sheet 203 is made of the same material as that of the back sheet 3 but is different in size to terminate at the end portion 203b. More specifically, both the width sizes of the back sheet 203 and the surface sheet 2 are substantially at W. The back sheet 203 and the surface sheet 2 sandwich the absorbent core 4 inbetween and are adhered at the peripheral edge region outside of the absorbent core 4.

Moreover, a liquid-impermeable sheet 9 is bonded at its end portion 9a to the end portion 2b of the surface sheet 2, so that the body-waste absorbing sheet 201 is manufactured with the liquid-impermeable sheet 9 overlapping the absorbent mat 1a. When this body-waste absorbing sheet 201 is to be used, a flap 210 can be formed by extending the liquid-impermeable sheet 9 sideways (shown dotted in Fig. 7). This flap 210 can be retained on the wall face 16 by retaining means such as adhesive tapes (omitted in Fig. 7), as shown in Fig. 4.

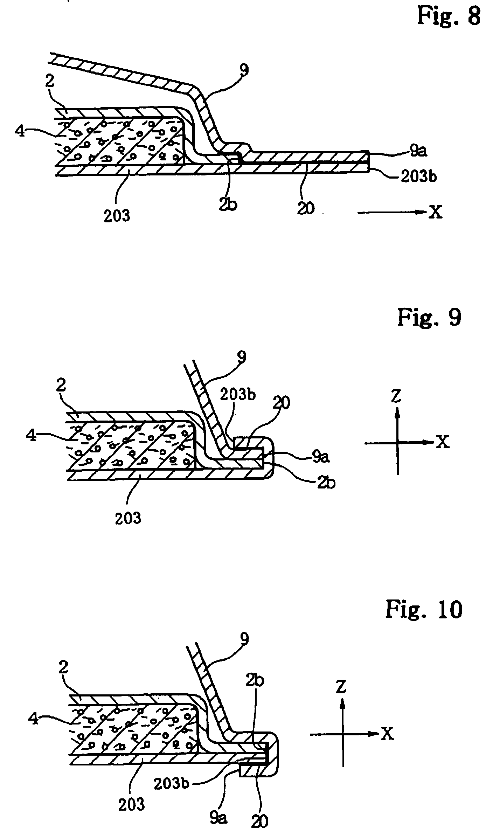

Figs. 8, 9 and 10 are partially enlarged sections showing the peripheral edge regions of individual modifications of the body-waste absorbing sheet 201 of Fig. 7. In these modifications, only the securing method of the sheet 9 is modified from the embodiment shown in Fig, 7 by slightly changing the length of at least one of the sheets. Therefore, the same reference numerals as those in Fig. 7 are used for describing the surface sheet, the back sheet and the liquid-impermeable sheet for forming the flap.

In Fig. 8, the liquid-impermeable sheet 9 is bonded in a face-to-face relation at its peripheral edge region outside of the absorbent core 4 on the back sheet 203 by means of an adhesive 20 such as hot-melt adhesive. Here, the liquid-impermeable sheet 9 and the back sheet 203 may be bonded at all their contacting faces but may be bonded with such an adhesive as is applied in one or plurality of continuous lines or in a spiral shape. At this time, the surface sheet 2 is sandwiched between the liquid-impermeable sheet 9 and the back sheet 203, but its end portion 2b is not extended so far in the X-direction as the end portion 9a of the liquid-impermeable sheet 9 and the end portion 203b of the back sheet 203. In other words, the liquid-permeable surface sheet 2 does not appear at the end portion of the body-waste absorbing sheet on the side where the sheet 9 is secured.

In this case, when the urine migrates along the liquid-permeable surface sheet 2 toward the end portion of the body-waste absorbing sheet, it can reach up to the end portion 2b of the surface sheet 2 but any further migration to the end portion is blocked by the liquid-impermeable sheet 9 and the back sheet 203 which are bonded with the adhesive 20. This structure prevents the urine from leaking or oozing from the end portion to the outside of the body-waste absorbing sheet.

In Fig. 9, the end portion 203b of the back sheet 203 is extended long (away from the absorbent core 4) in the X-direction from the end portion 2b of the surface sheet 2 and the end portion 9a of the liquid-impermeable sheet 9 and is curled up in a Z-direction. After this, the end portion 203b of the back sheet 203 is bonded in a face-to-face relation to the surface of the end portion 9a of the liquid-impermeable sheet 9 by means of the adhesive 20. In this case, as in the example of Fig. 8, the urine is checked, even if it flows along the liquid-permeable surface sheet 2, by the liquid-impermeable back sheet 203 so that the urine does not leak out of the body-waste absorbing sheet from its end portion.

In Fig. 10, unlike Fig. 9, in which the back sheet 203 is extended, the liquid-impermeable sheet 9 for forming the flap is extended in the X-direction so that the extended end portion 9a is bonded in a face-to-face relation to the back side of the end portion 203b of the back sheet 203 by means of the adhesive 20. In this case, too, the urine having flown toward the end portion along the surface sheet 2 is checked by the liquid-impermeable sheet 9 so that it does not leak to the outside of the body-waste absorbing sheet from its end portion.

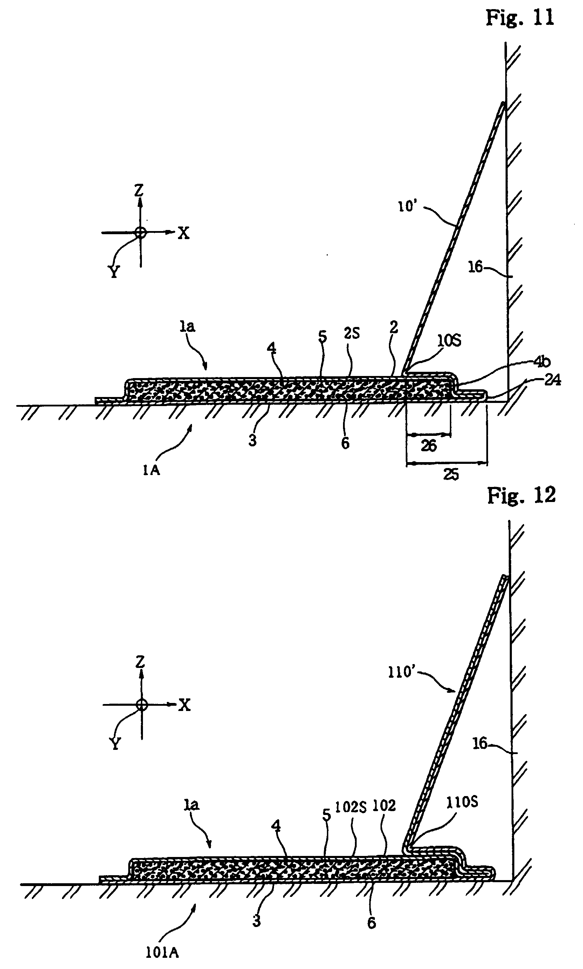

Figs. 11, 12 and 13 are sections showing other individual modifications of the body-waste absorbing sheets 1, 101 and 201, (or fourth, fifth and sixth embodiments) respectively. Here, the retaining means are omitted in Figs 11, 12 and 13.

A body-waste absorbing sheet 1A shown in Fig. 11 is a fourth embodiment, as modified from the body-waste absorbing sheet 1 shown in Fig. 2. In this body-waste absorbing sheet 1A, the flap 10 of Fig. 2 extending from one side of the absorbent mat 1a is folded at the edge portion of the absorbent mat 1a to overlap the surface sheet 2 and is bonded at a bonded portion 10S to an area (core-covering area) 2S of the surface sheet 2, which covers the absorbent core 4 of the absorbent mat 1a. That is, the body-waste absorbing sheet 1A of Fig. 11 is provided with a flap 10' starting from the bonded portion 10S. At this bonded portion 10S, the surface sheet 2 and the flap 10' are bonded continuously in a direction (or Y-direction) normal to the sheet of Fig. 11 by means of a hot-melt adhesive, thermal fusion or the like. At this time, a spacing 25 from the bonded portion 10S to the end portion 24 of the absorbent mat 1a is preferably about 10 to 50 mm, and a spacing 26 from the bonded portion 10S to the end portion 4b of the absorbent core 4 is preferably about 5 to 45 mm.

When the body-waste absorbing sheet 1A is to be used, the flap 10' is raised at the bonded portion 10S and retained on the wall face 16. The urine having been scattered to the liquid-impermeable flap 10' flows down, if much, along the flap 10' and then passes the surface sheet 2 from the bonded portion 10S so that it is absorbed by the absorbent core 4. This makes it hard for the urine having flown down along the flap 10' to flow out of the absorbent mat 1a.

With the surface sheet 2 and the flap 10' being bonded continuously in the Y-direction at the bonded portion 10S, as described above, the urine having flown down along the flap 10' is absorbed by the absorbent core 4 while spreading in the Y-direction along the bonded portion 10S so that it hardly flows out of the absorbent mat 1a.

At the bonded portion 10S, however, the surface sheet 2 and the flap 10' may be bonded partially (or discretely) at intervals in the Y-direction. In this case, pockets are formed at unbonded portions, between the flap 10' and the surface sheet 2, and the urine having flown down along the flap 10' flows into the pockets so that it is absorbed through the surface sheet 2 by the absorbent core 4. This makes it possible to prevent the urine having flown down along the flap 10' from being scattered.

A body-waste absorbing sheet 101A shown in Fig. 12 is a fifth embodiment, as modified from the body-waste absorbing sheet 101 shown in Fig. 3. In the body-waste absorbing shed 101A, the flap 110 of Fig. 3, as formed by extending the surface sheet 102 and the back sheet 3 to the same position, is folded at the edge portion of the absorbent mat 1a as in the body-waste absorbing sheet 1A shown in Fig. 11, and the flap 110 is bonded at a bonded portion 110S to an area (core-covering area) 102S of the surface sheet 102, which covers the absorbent core 4. That is, the body-waste absorbing sheet 101A of Fig. 12 is provided with a flap 110' starting from the bonded portion 110S. Since the surface of the flap 110' on the liquid receiving side is made, in this case, of the same nonwoven fabric as that of the surface sheet 2, the wine having splashed on the flap 110' flows down relatively slowly toward the absorbent mat 1a so that it becomes reluctant to scatter but is reliably absorbed by the absorbent mat 1a.

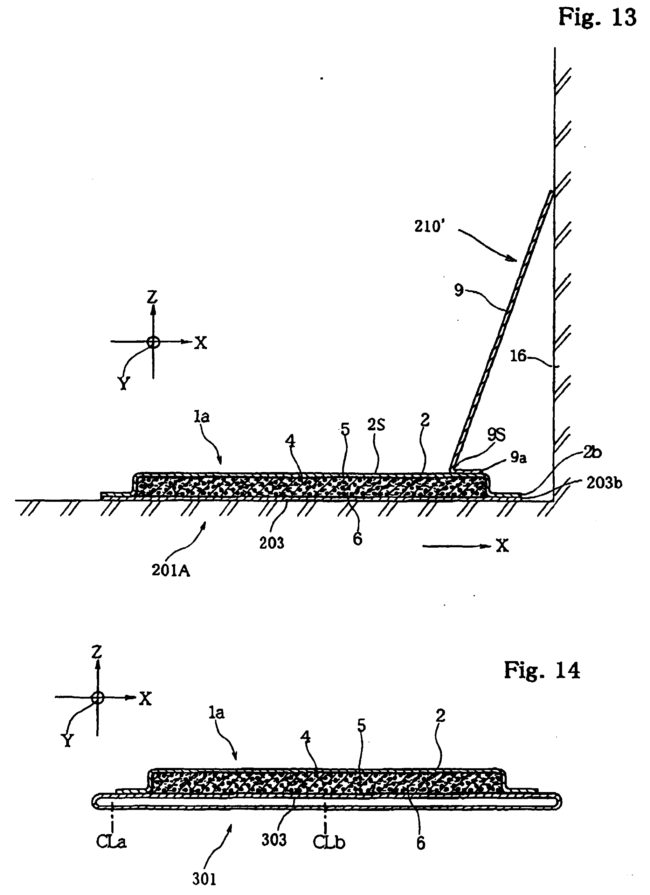

A body-waste absorbing sheet 201A shown in Fig. 13 is a sixth embodiment, as modified from the body-waste absorbing sheet 201 shown in Fig. 7. In this body-waste absorbing sheet 201A, the liquid-impermeable sheet 9 is bonded at a bonded portion 9S to the area (core-covering area) 2S of the surface sheet 2 covering the absorbent core 4. In this case, the liquid-impermeable sheet 9 is raised at the bonded portion 9S to form a flap 210' so that effects similar to those of the body-waste absorbing sheets shown in Figs. 11 and 12 can be attained. In this case, the end portion 9a of the liquid-impermeable sheet 9 may be extended in the X-direction to the position of the end portion 2b of the surface sheet 2 or the end portion 203b of the back sheet 203, and these sheets may be bonded, as shown in Fig. 8, 9 or 10, to prevent the leakage from their end portions.

When the flap is formed of the liquid-impermeable sheet 9 separate of the back sheet 3, as shown in Fig. 13, a nonwoven fabric may be bonded to the liquid receiving side of the liquid-impermeable sheet 9 to prevent the scattering of the urine.

Here, the body-waste absorbing sheet 1A shown in Fig. 11 can be manufactured by adding, to the manufacture method shown in Fig. 5, a step of pulling up the back sheet 3 to over the absorbent core 4 and bonding it to the surface of the surface sheet 2 covering the absorbent core 4. The body-waste absorbing sheet 101A shown in Fig. 12, on the other hand, can be manufactured by adding, to the manufacture method shown in Fig. 6, a step of pulling up the surface sheet 102 and the back sheet 3 bonded to over the absorbent core 4 and bonding the surface sheet 102 covering the absorbent core 4 and the pulled surface sheet 102.

Fig. 14 is a section showing a body-waste absorbing sheet 301 according to a seventh embodiment of the invention. In this body-waste absorbing sheet 301, there is provided a tubular back sheet 303 in place of the back sheet 3 of the Fig. 2. The tubular back sheet 303 is made of the same material as that of the back sheet 3. In a method for manufacturing this embodiment, the back sheet 303, as formed of a tube-shaped film or the like, is folded flat (by pressing a tube flat), and is fed in the MD as in the method shown in Fig. 5. The absorbent core 4 is placed on the back sheet 303 and fed thereon with the surface sheet 2, and the surface of the back sheet 303 (or upper portion of the flat tube) and the surface sheet 2 are adhered and bonded at the peripheral edge region outside of the absorbent core 4. This laminate is cut in individual sizes to complete the body-waste absorbing sheets 301.

At the using time, the tubular back sheet 303 may be cut along a cutting line CLa extending in the Y-direction, as located at a position offset to one side portion, so that the cut back sheet 303 can be developed sideways to form a flap extending sideways from one side of the absorbent mat 1a, as shown in Figs. 1 and 2. The cutting line CLa may be formed, for example, by perforating the back sheet 303 for easy cutting upon use. With the back sheet 303 being cut along the cutting line CLa, the body-waste absorbing sheet 301 can be used as that for the pet, as shown in Fig. 4. Alternatively, the back sheet 303 may be cut during the manufacturing process of the body-waste absorbing sheet 301. If so, the body-waste absorbing sheet 301 will be sold having substantially the same structure as that of the body-waste absorbing sheet 1.

On the other hand, the tubular back sheet 303 may be cut along a cutting line CLb extending in the Y-direction, as located at the widthwise center, to provide an optimum structure for a body-waste absorbing sheet (or a bed sheet) to be used on a bed for cares. Specifically, the absorbent mat 1a can be easily prevented from going out of position on the bed by extending it on a mat or sheet of the bed and by wrapping the two side flaps in the mat or sheet. The body-waste absorbing sheet 301 for the bed of this kind can be used for the caring purposes or in the childbed.

The cutting of the back sheet 303 along the cuffing line CLb is preferably performed during the manufacturing process of the body-waste absorbing sheet 301. In this case, the resulting body-waste absorbing sheet 301 as a final product has two flaps extending in opposite directions from two sides of the absorbent mat 1a. Alternatively, the cutting line CLb may be formed, for example, by perforating the back sheet 303 for easy cutting upon use.

This body-waste absorbing sheet 301 to be cut along the cutting line CLb is preferably formed such that the absorbent mat 1a having the absorbent core 4 is sized to have a width equal to or slightly smaller than that of a mat to be placed on the bed. When the back sheet 303 cut along the aforementioned center cutting line CLb is developed, it provides the flaps extending from the two sides of the absorbent mat 1a. The extension length of each flap is preferably no less than 0.3 times or more preferably no less than 0.5 times but no more than 2 times the width of the absorbent mat 1a.

When the body-waste absorbing sheet 301 for caring is to be manufactured, moreover, the back sheet 303 may be folded back from the state shown in Fig. 14 over an area (core-covering area) of the surface sheet 2 covering the absorbent core 4 to thereby bond the surface sheet 2 and the back sheet 303 together. In the body-waste absorbing sheet 301 for caring thus manufactured, the flaps extending from the two sides of the absorbent mat 1a are started from the core-covering area of the surface sheet 2 covering the absorbent core 4. When this body-waste absorbing sheet 301 for caring is used, the body waste such as the urine, as passed to the surface of the surface sheet 2 covering the absorbent core 4, is checked by the bonded portions between the surface sheet 2 and the flaps so that it is hard to flow out to the portions of the two side flaps.

In addition, the body-waste absorbing sheet according to the invention can also be used as a drip sheet for transporting cut flowers or the like.

As a result of the various structures described in detail above, advantages of the invention may include one or more of the following:
(1) Because a flap includes no absorbent core, a body-waste absorbing sheet can be provided at a lower cost than that of the prior art;
(2) Because a flap has a remarkably light weight, an adhesive for retaining it on a wall face or the like need not have a high adhesion; and
(3) By providing flaps on two sides to wrap them in a sheet or mat on a bed, a body-waste absorbing sheet can be prevented from going out of position when used for cares.

Although various exemplary embodiments have been shown and described, the invention is not limited to the embodiments shown. Therefore, the scope of the invention is intended to be limited solely by the scope of the claims that follow.

## Claims

1. A body-waste absorbing sheet comprising:
a rectangular absorbent mat including a liquid-permeable surface sheet, a liquid-impermeable back sheet and an absorbent core sandwiched between said surface sheet and said back sheet; and
a flap extending from at least one side of said absorbent mat,
wherein said flap has an extension length of no less than 0.3 times the length of the side of said absorbent mat parallel to the extending direction of said flap.

2. A body-waste absorbing sheet according to Claim 1,
wherein said flap is formed of said back sheet.

3. A body-waste absorbing sheet according to Claim 2,
wherein said back sheet for forming said flap is treated on its surface or embossed.

4. A body-waste absorbing sheet according to Claim 2,
wherein said flap is provided with a nonwoven fabric layer.

5. A body-waste absorbing sheet according to Claim 4,
wherein said nonwoven fabric layer is formed of a portion of the surface sheet extending from said absorbent mat.

6. A body-waste absorbing sheet according to Claim 1,
wherein said flap is formed of a liquid-impermeable sheet made separately of said back sheet.

7. A body-waste absorbing sheet according to Claim 6,
wherein said liquid-impermeable sheet is bonded at an edge portion of said absorbent mat to said back sheet.

8. A body-waste absorbing sheet according to Claim 6,
wherein said liquid-impermeable sheet for forming said flap is treated on its surface or embossed.

9. A body-waste absorbing sheet according to Claim 6,
wherein said flap is provided with a nonwoven fabric layer.

10. A body-waste absorbing sheet according to Claim 1,
wherein said flap includes means for retaining the flap on a wall face in a position folded upwards from said absorbent mat so that said body-waste absorbing sheet is used for absorbing the body-waste of a pet.

11. A body-waste absorbing sheet according to Claim 1,
wherein two flaps extend from opposite sides of said absorbent mat, and
wherein said two flaps can be wrapped in a sheet or mat on a bed so that said body-waste absorbing sheet can be used for absorbing the body-waste on the bed.

12. A body-waste absorbing sheet comprising:
a rectangular absorbent mat including a liquid-permeable surface sheet, a liquid-impermeable back sheet and an absorbent core sandwiched between said surface sheet and said back sheet; and
a flap extending from a starting point on an area of said surface sheet which covers said absorbent core of said absorbent mat.

13. A body-waste absorbing sheet according to Claim 12,
wherein said back sheet is folded at an edge portion of said absorbent mat to extend over said absorbent core, and
wherein said back sheet is extended from the starting point to form said flap.

14. A body-waste absorbing sheet according to Claim 13,
wherein said back sheet for forming said flap is treated on its surface or embossed.

15. A body-waste absorbing sheet according to Claim 13,
wherein said flap is provided with a nonwoven fabric layer.

16. A body-waste absorbing sheet according to Claim 15,
wherein said nonwoven fabric layer is formed of a portion of the surface sheet extending from said absorbent mat.

17. A body-waste absorbing sheet according to Claim 12,
wherein said flap is formed of a liquid-impermeable sheet made separately of said back sheet.

18. A body-waste absorbing sheet according to Claim 17,
wherein said liquid-impermeable sheet is bonded as an edge portion of said absorbent mat to said back sheet.

19. A body-waste absorbing sheet according to Claim 18,
wherein said liquid-impermeable sheet for forming said flap is treated on its surface or embossed.

20. A body-waste absorbing sheet according to Claim 18,
wherein said flap is provided with a nonwoven fabric layer.

21. A body-waste absorbing sheet according to Claim 12,
wherein said flap includes means for retaining the flap on a wall face in a position folded upwards from said absorbent mat so that said body-waste absorbing sheet is used for absorbing the body-waste of a pet.

22. A body-waste absorbing sheet according to Claim 12,
wherein two flaps extend from opposite sides of said absorbent mat, and
wherein said two flaps can be wrapped in a sheet or mat on a bed so that said body-waste absorbing sheet can be used for absorbing the body-waste on the bed.

23. A method for manufacturing a body-waste absorbing sheet, comprising the steps of:
adhering or fusing a folded or tubular liquid-impermeable back sheet and a liquid-permeable surface sheet at an outer periphery of an absorbent core while sandwiching said absorbent core between said back sheet and said surface sheet;
forming a rectangular absorbent mat while sandwiching said absorbent core between said back sheet and said surface sheet; and
forming a flap extending from said absorbent mat by said back sheet unfolded or cut from the tube.

24. A body-waste absorbing sheet manufacturing method according to Claim 23, further comprising the step of:
folding back said back sheet at an edge portion of said absorbent mat, to bond said back sheet to said surface sheet at an area covering said absorbent core.

25. A body-waste absorbing sheet manufacturing method according to Claim 23,
wherein said flap is extended to a length no less than 0.3 times the length of the side of said absorbent mat.

26. A method for manufacturing a body-waste absorbing sheet, comprising the steps of:
adhering or fusing a liquid-impermeable back sheet and a liquid-permeable surface sheet to be overlapped substantially all over said back sheet, at least in an outer periphery of an absorbent core, while sandwiching said absorbent core at an offset position between said back sheet and said surface sheet; and
forming a rectangular absorbent mat sandwiching said absorbent core between said back sheet and said surface sheet, and a flap attending from said absorbent mat while overlapping said back sheet and said surface sheet.

27. A body-waste absorbing sheet manufacturing method according to Claim 26, further comprising the step of:
folding said back sheet and said surface sheet at an edge portion of said absorbent mat, to bond said surface sheet to itself at an area covering said absorbent core.

28. A body-waste absorbing sheet manufacturing method according to Claim 26,
wherein said flap is extended to a length no less than 0.3 times the length of the side of said absorbent mat.
